# EUROPEAN PATENT APPLICATION

(11) **EP 0 571 698 A1**
(43) Date of publication of application: **01.12.1993**
(21) Application number: 92830599.4
(22) Date of filing: 30.10.1992
(51) Int. Cl.: F16L 33/22

(54) **Leak-proof coupling for flexible pipes**

(30) Priority: 25.05.1992 IT BO920207
(71) Applicant: FLEX MATIC S.P.A., Calderara di Reno-Bargellino, Bologna (IT)
(72) Inventor: Bettini, Luciano, Calderara Di Reno, Bologna (IT)
(74) Representative: Dall'Olio, Giancarlo

(57) **Abstract**

The leak-proof coupling for flexible pipes comprises a body (3) defining a longitudinal tubular portion (4), to which a flexible pipe (2) is to be connected, and a threaded portion (5) onto which a sleeve (10) is adapted to be screwed, this sleeve featuring inside a conical section (10a), that, in the assembly configuration, is arranged in correspondence with the tubular portion (4), so being convergent toward its external end. A ring (14) is adapted to be inserted inside the sleeve (10) to match the narrowing defined by the conical section (10a) of said sleeve (10), so as to go in abutment on the front shoulder (5a) of the threaded portion (5), in the assembly phase, and to be forced in the conical section (10a) in order to clasp the end of the flexible pipe (2) on the tubular portion (4).

## Description

The present invention lies in the technical field concerning the manufacture of couplings for leak-proof connection of flexible pipes.

It is known that for connecting flexible pipes, e.g. of synthetic material, which are designed to conduct fluids, various joints are used.

Some of these joints feature a threaded coupling that has, at one end, a tubular portion for connecting a flexible pipe.

Such a tubular portion, commonly defined fish-bone, usually has outside a series of circumferential sawtothed grooves that prevent the flexible pipe from slipping off.

The joints of this type are used, for example, in car air conditioners.

In particular, a coupling of known type comprises a bell shaped sleeve, at the bottom of which there is a hole for the passage of the fish-boned portion; the bell mouth is turned toward the part of the flexible pipe to be connected.

After the sleeve has been set on the tubular part of the coupling, the flexible pipe results to be connected with the tubular portion.

Then the sleeve is tightened on the tubular portion of the coupling, so as to obtain the seal clasp of the flexible pipe.

Such clasp is achieved by means of special devices that carry out the permanent sleeve deformation.

Reported drawbacks connected with use and assembly of such couplings mainly result from the necessity to resort to rather complex special equipment and specialized personnel that obviously affects the final cost of the product.

Moreover, it is evident that in case of breaking of the flexible pipe it is necessary to replace the whole joint as it is locked to the same pipe in irremovable way.

Besides the joint cost, as has been already said, the replacement requires special equipment and specialized personnel.

A different type of joint is obtained by a method illustrated in the patent N. 1.192.028 of the same Applicant.

This method provides for the connection of the metal bell with a tubular coupling that has a truncated-cone band separated from the joint body by a circumferential groove.

The connection is made by inserting the same tubular coupling in the bottom hole of the bell, that has a diameter inferior to the maximum diameter of the above mentioned band.

A punch, axially hollow, pushes the bell until the hole edge inserts in the groove and, at the same time, the punch cold-heads the edge of the band bigger diameter thereby blocking the bell.

The object of the present invention is to provide a leak-proof coupling for flexible pipes that is easy to assemble and replace.

The cited object is obtained in accordance with the claims.

The coupling assembly, that is proposed by the subject invention, does not require the use of particularly complicated equipment nor of specialized personnel, but it can be easily realized with tools commonly used for blocking screw members.

Moreover, in case of pipe breaking, it is possible to replace the coupling easily and to use it again.

The characteristics of the invention are pointed out in the following, with particular reference to the enclosed drawings, in which:
- fig. 1 shows a prospective, exploded view of the subject coupling for flexible pipes;
- fig. 2 shows a longitudinal section of such coupling in the assembly configuration;
- fig. 2a shows an enlarged view of particular A of fig. 2.

With reference to the above figures, numeral 1 indicates the coupling for leak-proof connection of a flexible pipe 2.

The coupling 1 includes a body 3 that defines a longitudinal tubular portion 4, on which the flexible pipe 2 is to be clasped.

The tubular portion 4 projects from a threaded portion 5 of the body 3 that has a diameter bigger than the diameter of the tubular portion 4; the threaded portion 5 is delimited, at the side opposite to the tubular portion 4, by a hexagonal nut 6 integral with the same body 3.

Moreover, on the body 3 there is mounted, at the end opposite to the tubular portion 4, a lock nut 7.

The tubular portion 4 forms, on the external surface, a truncated-cone shaped band 8, that is turned with the bigger diameter end toward the threaded portion 5.

In the section comprised between the band 8 and the threaded portion 5, on the external surface of the tubular portion 4, there are also featured, side by side, two collars 9 of rectangular profile.

A sleeve 10, that has at one end an internal threading 11, is designed to be screwed on the threaded portion 5 of the body 3; an exagonal nut 12 is formed externally on the sleeve, in correspondence with the threading 11.

On the opposite end, the sleeve 10 has a broadening 13 for facilitating the entrance of the flexible pipe 2.

The sleeve 10 has inside a central conical section 10a, for connecting each other the cilindrical sections 10b, 10c which are adjacent to the section 10a. In fact, the diameter of the two sections 10b,10c are different from each other, respectively bigger, at the side of the threading 11, and smaller, at the side of the entrance 13.

The coupling provides after all a ring 14 that, in the assembly phase, is designed to be inserted inside the sleeve 10, in correspondence with the threading 11 so as to match the narrowing defined by the conical section 10a.

In practice, in the assembly phase, the ring 14 is connected with the sleeve 10 and the flexible pipe 3, that is clasped on the tubular portion 4 of the coupling body 3, passes through both of them.

In that phase, the ring 14 goes in abutment against the front circular shoulder 5a defined by the threaded portion 5a at the tubular portion 4 base.

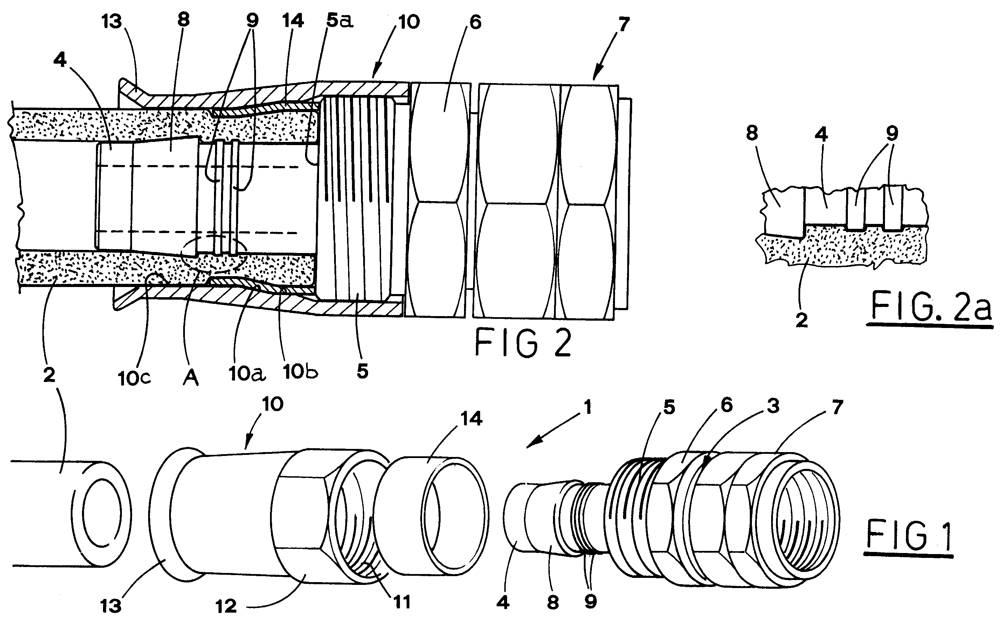

Consequently, by screwing the sleeve 10 onto the threaded portion 5, the ring 14 is progressively forced into the conical section 10a of the sleeve 10, getting deformed permanently so as to block the end of the flexible pipe 2 on the same tubular portion 4, as seen in the fig. 2.

The sleeve 10 can be unscrewed from the body 3 of the coupling, from which it is possible to take off the pipe to be replaced; in practice only the ring 14, of very low cost, is lost, since it remains bound to the pipe to be replaced.

The replacement can be done with commonly used tools and without resorting to specialized personnel.

The truncated-cone band 8 of the tubular portion 4 facilitates the clasping of the flexible pipe 2 by carrying out a dilatation of the same pipe end.

This allows, in particular, to overcome easily, in the assembly phase, the discontinuity of the collars 9 from the same tubular portion 4.

Such collars 9, together with the widened margin of the band 8, constitute instead bond element of the pipe 2, on connecting the sleeve 10, remaining shut in the pipe 2, as seen in detail in the enlarged particular A in fig. 2a.

## Claims

1. Leak-proof coupling for flexible pipes, comprising a body (3) defining a longitudinal tubular portion (4) on which the flexible pipe (2) is to be clasped,
**characterized in that it includes:**
a sleeve (10) that is designed to be screwed onto the threaded portion (5) of said body (3) and that has inside a conical section (10a) that, in the assembly configuration, is arranged in correspondence with said tubular portion (4) and is convergent toward the external end of said tubular portion (4);
a ring (14) that is inserted inside said sleeve (10), matching the narrowing defined by said conical section (10a) of the sleeve (10), until it goes in abutment against the front shoulder (5a) of said threaded portion (5) of the body (3) in the assembly phase, and results forced into said conical section (10a), so as to clasp the end of the flexible pipe (2) on said tubular portion (4).

2. Coupling according to claim 1, **characterized in that** said conical section (10a) is arranged centrally in said sleeve (10) so as to connect the cilindrical adjacent sections (10b,10c), which have respectively bigger diameter, at the side of a threading (11), and smaller diameter at the side of an entrance (13) of the said sleeve (10).

3. Coupling according to claim 1, **characterized in that** said tubular portion (4) features, on the external surface, a truncated-cone band (8) having smaller diameter, turned toward the said external end of the said portion (4), a plurality of collars (9) with rectangular shape being formed side by side in the section between said band (8) and said threaded portion (5).
